# EUROPÄISCHE PATENTSCHRIFT

(11) **EP 2 462 481 B1**
(45) Veröffentlichungstag und Bekanntmachung des Hinweises auf die Patenterteilung: **08.05.2013**
(21) Anmeldenummer: 10776270.0
(22) Anmeldetag: 05.08.2010
(51) Int. Cl.: G02C 13/00

(54) **VISIERMESSBÜGEL ZUR BESTIMMUNG DES FASSUNGSSCHEIBENWINKELS EINER BRILLENFASSUNG UND VERFAHREN ZUR BESTIMMUNG DES FASSUNGSSCHEIBENWINKELS**
SIGHTING MEASUREMENT BRACKET FOR DETERMINING THE FRAME LENS ANGLE OF AN EYEGLASS FRAME, AND METHOD FOR DETERMINING THE FRAME LENS ANGLE
ÉTRIER DE MESURE PERMETTANT DE DÉTERMINER L'ANGLE DE CINTRE D'UNE MONTURE DE LUNETTES, ET PROCÉDÉ DE DÉTERMINATION DE L'ANGLE DE CINTRE D'UNE MONTURE

(30) Priorität: 05.08.2009 DE 102009036243
(43) Veröffentlichungstag der Anmeldung: 13.06.2012
(73) Patentinhaber: Ollendorf, Hans-Joachim, 39517 Brunkau (DE)
(72) Erfinder: OLLENDORF, Hans-Joachim, 39517 Brunkau (DE); HERRMANN, Hartmut, 39517 Lüderitz (DE)
(74) Vertreter: Herzog, Günter
(86) Internationale Anmeldenummer: PCT/DE2010/000922
(87) Internationale Veröffentlichungsnummer: WO 2011/015194

(56) Entgegenhaltungen:
- WO-A1-2006/029875
- DE-A1- 10 020 391
- DE-U1-202006 015 267

## Beschreibung

### Stand der Technik

Die Erfindung geht aus von der Verwendung eines Visiermessbügels nach dem Oberbegriff des Anspruchs 1, von einem Visiermessbügel zur Bestimmung des Fassungsscheibenwinkels einer Brillenfassung mit Hilfe eines Videozentriersystems nach dem Oberbegriff des Anspruchs 2 sowie einem Verfahren zur Bestimmung des Fassungsscheibenwinkels nach dem Oberbegriff des Anspruchs 9.

Als Fassungsscheibenwinkel einer Brillenfassung wird jener horizontale Winkel bezeichnet, den die beiden später in die ausgewählte Brillenfassung einzusetzenden Brillengläser gegenüber der Fassungsscheibe, also einer zur Blickrichtung senkrecht verlaufenden Ebene, einnehmen. Der Fassungsscheibenwinkel ist demnach durch die Abwinkelung der Brillengläser von der Nasenwurzel in Richtung der Ohren, also durch die Krümmung des Brillengestells, bestimmt.

Dieser Winkel findet Eingang in das System der Zentrierdaten und bildet somit eine Grundlage zur exakten Bestimmung eines Brillenglases und dessen Einsatz in einem Brillengestell.

Zur Bestimmung des Fassungsscheibenwinkels sind manuell betätigbare Messeinrichtungen bekannt, die nach dem Prinzip eines herkömmlichen ausgedruckten Winkelmessers derart funktionieren, dass die leere Brillenfassung auf den Winkelmesser aufgelegt und der Winkel abgelesen wird. Neben subjektiv bedingten Messfehlern liegt dieser Methode der prinzipielle Fehler inne, dass die abgesetzte Fassung einen anderen Durchblick und damit einen anderen Fassungsscheibenwinkel haben kann. Bei Nutzung von Videozentriersystemen wird bisher eine Vorrichtung verwendet, die durch manuelles Drehen eines speziellen Messaufsatzes parallel zur Fassungsebene die Auswertung des Videobildes zur Bestimmung des Fassungsscheibenwinkels ermöglicht. Auch dieser Methode wohnt die Gefahr eines großen subjektiven Fehlers inne, da das manuelle parallele Einstellen der Vorrichtung sehr vom Geschick des Bedienenden abhängt.

Des Weiteren ist unter der DE 10 2008 062 511 eine Vorrichtung bekannt, die bei richtiger Handhabung eine sehr genaue Ermittlung des Fassungsscheibenwinkels einer Brille bzw. eines Brillengestells ermöglicht. Allerdings ist die richtige Handhabung auch bei Anwendung eines Videozentriersystems recht spezifisch und aufwändig.

Ferner ist mit der DE 20 2006 015 267 U 1 eine Vorrichtung zur Bestimmung von Zentrierdaten einer Brille bekannt geworden, wobei diese Vorrichtung zumindest eine erste Messskala zur Längenmessung in zumindest einer Messrichtung der Vorrichtung umfasst, wobei die erste Messskala einen ersten linken und einen ersten rechten Skalenabschnitt zum Anvisieren eines linken bzw. rechten Brillenglases der Brille in zumindest einer Visierrichtung der Vorrichtung umfasst, und eine Visiereinrichtung mit zumindest einem linken und einem rechten Visiermarkierungsabschnitt besitzt, wobei der linke bzw. rechte Visiermarkierungsabschnitt in der Visiereinrichtung jeweils von dem ersten linken bzw. ersten rechten Skalenabschnitt beabstandet ist und in Projektion parallel zur Visiereinrichtung zumindest teilweise mit dem ersten linken bzw. ersten rechten Skalenabschnitt überlappt ist.

Nachteilig hierbei ist, dass ein zusätzliches Messelement, eine Messskala, benötigt wird, um hier eine entsprechende Aussage treffen zu können bzw. die entsprechenden Werte ermitteln zu können.

Aus der WO 2006/029875 A1 sind ein Messbügel sowie eine Einrichtung und ein Verfahren zur Bestimmung des Vorneigungswinkels und auch des Hornhautscheitelabstandes bekannt geworden.

So wird ein Messbügel vorgestellt, der an einer Brillenfassung mit einer Traverse und zwei Schenkeln ausgebildet ist, wobei eine Vorderseite des Messbügels zumindest drei Frontzielmarken für eine Messung des Vorneigungswinkels einer zu vermessenden Brillenfassung aufweist und zumindest eine der Frontzielmarken gegenüber den zumindest zwei anderen Frontzielmarken senkrecht zur Vorderseite des Messbügels räumlich versetzt angeordnet ist. Zum Befestigen an der Brillenfassung sind gekoppelte federbelastete Klemmelemente vorgesehen sind, die an den unteren Rand der Brillenfassung anschwenkbar sind. Der Messbügel ist einhändig bedienbar.

Mit dieser Vorrichtung soll neben dem Vorneigungswinkel gleichfalls der Hornhautscheitelabstand bestimmbar sein, für die Bestimmung des Fassungsscheibenwinkels ist diese Vorrichtung nicht vorgesehen.

Eine Vorrichtung zur bestimmung des Fassungsscheiben-winkels ist aus DE 10020391 bekannt.

### Die Erfindung und ihre Vorteile

Der erfindungsgemäße Visiermessbügel mit den Merkmalen des Hauptanspruchs 1 hat demgegenüber den Vorteil, dass sich der Fassungsscheibenwinkel nach dem gleichen vorteilhaften Prinzip, wie es bereits für die Bestimmung der anderen Zentrierdaten einer Brille unter Verwendung von Visiermessbügel und Videozentriersystem bekannt ist und angewendet wird, bestimmen lässt.

Der erfindungsgemäße Visiermessbügel mit den Merkmalen des Anspruchs 1 hat den Vorteil, dass er aufgrund seiner gegenüber herkömmlichen Visiermessbügeln modifizierten Bauweise sehr leicht ist und sich gut mit einer Hand bedienen und auf das Brillengestell aufsetzen lässt. Er ist zu einer Brille bzw. einem Brillengestell positionierbar und befestigbar. Nach dem Aufsetzen auf das Brillengestell werden entsprechende Bildaufnahmen vom Probanden gefertigt. Diese Aufnahmen werden in das Videozentriersystem eingearbeitet, auf deren Grundlage dann die entsprechenden Zentrierdaten in bekannter Weise ermittelt werden.

Durch die Beabstandung der Klemmelementenpaare gegenüber der Traverse des Visiermessbügels ist ein verhältnismäßig großer horizontaler Abstand (vorzugsweise größer 10 mm) zwischen der oberen Fassungskante des Brillengestells und der Traverse des Visiermessbügels realisierbar. Dadurch können auch Brillenfassungen mit starker Krümmung, d. h. sehr großem Fassungsscheibenwinkel, sog. Sportbrillen, komfortabel und sicher ausgemessen werden. Darüber hinaus zeichnet sich der Visiermessbügel durch eine hohe Stabilität und einfache Bedienung aus. Hervorzuheben ist insbesondere seine ergonomische und angenehme Handhabung.

Nach einer vorteilhaften Ausgestaltung des erfindungsgemäßen Visiermessbügels ist die schwenkbare Lagerung der unteren Klemmelemente federnd ausgeführt, d. h. die Schwenkbewegung in beide Richtungen erfolgt gegen eine Federkraft, so dass die unteren Klemmelemente nach dem Abnehmen des Visiermessbügels von der Brillenfassung selbständig in ihre Ausgangslage zurückkehren.

Nach einer diesbezüglich vorteilhaften Ausgestaltung der Erfindung ist die federnde Schwenkbewegung der unteren Klemmelemente mittels eines elastischen Torsionsstabs ausgeführt, der parallel zu deren vertikalen Achse angeordnet ist. An seinem oberen Ende ist er drehfest und an seinem unteren Ende drehbeweglich mit dieser Achse verbunden. Zwischendurch ist er in einem Widerlager geführt.

Nach einer anderweitigen vorteilhaften Ausgestaltung der Erfindung sind die Klemmelementenpaare lösbar mit der Traverse verbunden. Dadurch ist ihr Abstand zueinander auf der Traverse veränderbar, so dass unterschiedliche Größen von Brillengestellen, beispielsweise auch Gestelle von Kinderbrillen, mit ein und demselben Visiermessbügel komfortabel und sicher ausgemessen werden können.

Nach einer zusätzlichen vorteilhaften Ausgestaltung der Erfindung ist die vertikale Achse der Klemmelementenpaare in Richtung des Vorneigungswinkels der Brillenfassung schräg gestellt. Dadurch wird die von den Klemmelementen gebildete Fassungsebene an die Vorneigung der Brillenfassung angepasst.

Werden die Klemmelementenpaare in Richtung der Mitte der Traverse, an der sie mit Abstand, beispielsweise über einen Befestigungssteg, befestigt sind, leicht schräg gestellt, so passen sie sich besser an die Krümmung des Brillengestells an, wodurch sich der Halt des Visiermessbügels auf dem Brillengestell verbessert.

Nach einer anderweitigen vorteilhaften Ausgestaltung der Erfindung sind die Klemmelemente mit einer Dreipunktauflage für den Rand der Brillenfassung versehen. Dadurch können sich die Klemmelemente sowohl an Fassungen mit oder ohne Stützgläser, beispielsweise aus Kunststoff oder Metall, sowie auch an randlose Brillenfassungen als auch an sog. Nylor-Brillen schnell und sicher anlegen, so dass in jedem Fall der Fassungsscheibenwinkel messtechnisch richtig ermittelt werden kann.

Das erfindungsgemäße Verfahren mit den kennzeichnenden Merkmalen des Anspruchs 8 hat den Vorteil, dass sich die Ausgangsdaten zur Ermittlung des Fassungsscheibenwinkels ohne großen Aufwand mit Hilfe des Visiermessbügels nach dem gleichen Prinzip wie die Datenermittlung für die übrigen relevanten Zentrierdaten einer Brillenfassung sehr genau bestimmen lassen. Der Fassungsscheibenwinkel stellt sich als horizontale Winkelabweichung der Markierung der unteren Klemmelemente von den fixen Markierungen auf der Traverse des Visiermessbügels dar. Die horizontale Winkelabweichung stellt sich im Augenblick des Festklemmens der unteren schwenkbaren Klemmelemente an dem unteren Rand der Brillenfassung ein, wobei die Klemmelemente eine Schwenkbewegung ausführen. Die Größe dieser Schwenkbewegung ist durch die Krümmung der Fassungsscheibe der Brillenfassung bestimmt. Mittels eines Videozentriersystems wird eine frontale Aufnahme bzw. ein Videobild vom Probanden mit aufgesetzter Brillenfassung, in die später das Glas bzw. die Gläser eingesetzt werden sollen, und von dem an dieser befestigten Visiermessbügel gefertigt. Dieses Bild bzw. das Videobild wird einem Computer zugeführt und über verfahrenseigene Software ausgewertet.

In der systemeigenen Software sind gleichfalls die Werte der einzusetzenden Gläser eingegeben und somit bekannt. Diese betreffen die Innenkurve, die Außenkurve, die Fassungsscheibenhöhe, die Fassungsscheibenbreite und den Glasdurchblickspunkt. Diese Werte finden gleichfalls Eingang in die Ermittlung des Fassungsscheibenwinkels.

So werden die ermittelten Werte für den Fassungsscheibenwinkel mit den ermittelten bzw. bekannten Werten der Brillenfassung, bezogen auf das Auge des Probanden, den Werten des Glases, welches in die Brillenfassung eingesetzt werden soll, sowie aus den Werten der Lage des Glases zur Brillenfassung, bekannt aus dem Videozentriersystem und dessen Software, abgeglichen und bilden die Grundlage zur Auswahl der einzusetzenden Brillengläser.

Weitere Vorteile und vorteilhafte Ausgestaltungen der Erfindung sind der nachfolgenden Beschreibung, der Zeichnung und den Ansprüchen entnehmbar.

### Zeichnung

Ein Ausführungsbeispiel der Erfindung ist in den Zeichnungen dargestellt und im Folgenden näher beschrieben. In den Zeichnungen zeigen:
- Fig. 1: die Fassungsscheibe einer Brillenfassung mit aufgesetztem Visiermessbügel in der Draufsicht,
- Fig. 2: den Visiermessbügel in räumlicher Darstellung,
- Fig. 3: den auf die Brillenfassung aufgesetzten Visiermessbügel in Vorderansicht und
- Fig. 4: eine Seitenansicht zu Fig. 3

### Beschreibung des Ausführungsbeispiels

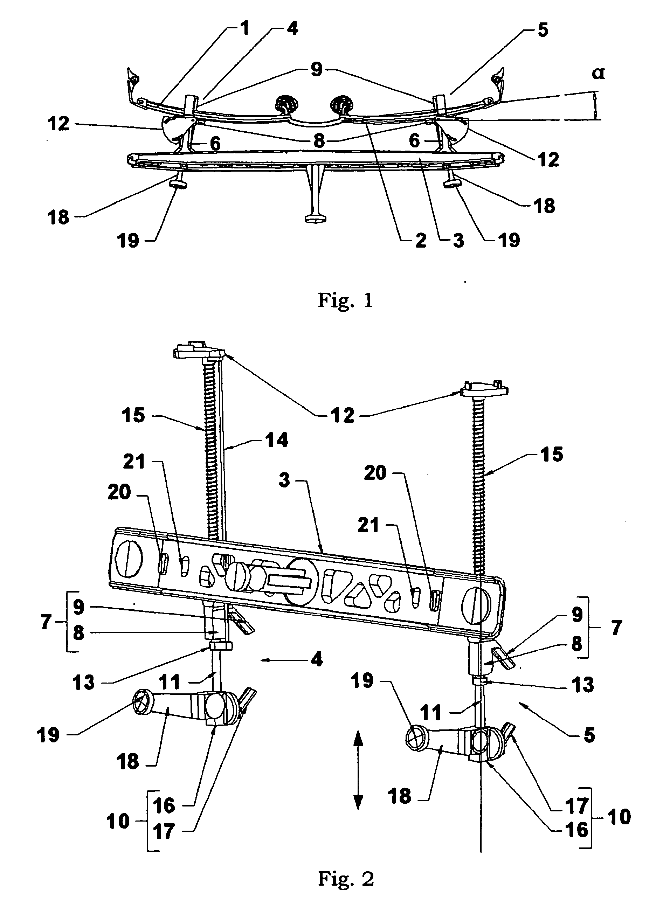

Aus der in Fig. 1 dargestellten Draufsicht der Fassungsscheibe einer ohne Bügel dargestellten Brillenfassung 1 ist der Fassungsscheibenwinkel β zu erkennen, der sich aus der Krümmung bzw. Abwinkelung der Brillenfassung 1 gegenüber der an die Basiskurve 2 des Brillenglases gelegten Tangente ergibt.

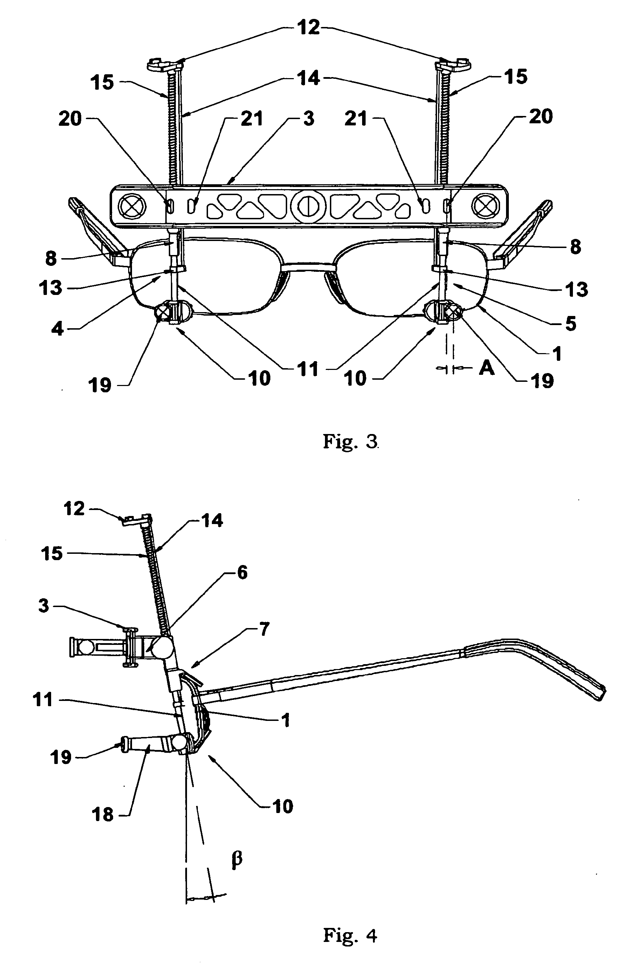

Wie aus der räumlichen Darstellung des Visiermessbügels in Fig. 2 zu erkennen, weist der Visiermessbügel eine Traverse 3 auf, an der mit gleichem Abstand zu dessen Mitte Klemmvorrichtungen 4 und 5 angeordnet sind. Um einen ausreichenden Abstand zwischen der Traverse 3 und der Brillenfassung 1 zu gewährleisten sind die Klemmvorrichtungen 4, 5 über einen Befestigungssteg 6 mit einer Länge von mindestens 10 mm an der Traverse 3 befestigt (siehe auch Fig. 4). Ihre Verbindung mit der Traverse 3 ist lösbar gestaltet, um die Klemmvorrichtungen 4, 5 auf unterschiedliche Breiten von Brillen einstellen zu können.

Jeweils unterhalb des freien Endes der Befestigungsstege 6 ist ein oberes Klemmelement 7 starr befestigt, das in der Verlängerung der Stirnfläche des Befestigungssteges 6 ein Anlageteil 8 zur Aufnahme der Vorderseite des oberen Randes der Brillenfassung 1 sowie einen sich von diesem Anlageteil 8 nach unten abspreizenden Schenkel 9 aufweist, so dass sich in Fortsetzung der Ebene des Befestigungssteges 6 eine V-förmige Aufnahme zur Auflage des Visiermessbügels auf den oberen Rand der Brillenfassung 1 herausbildet. Zur unmittelbaren Anlage des oberen Randes der Brillenfassung 1 weist das Anlageteil 8 zwei parallele im Querschnitt keilförmig aus der Anlageebene herausragende Erhebungen und die diesen zugewandte Innenseite des Schenkels 9 eine ebenfalls im Querschnitt keilförmig aus der Anlageebene herausragende Erhebung auf, so dass für die Anlage des oberen Randes der Brillenfassung 1 drei Anlagelinien zur Verfügung stehen. Dadurch, dass der Rand der Brillenfassung 1 oder die Kante eines Brillenglases annähernd eine Linie bilden, kommt es zwischen dem jeweiligen oberen Klemmelement 7 des Visiermessbügels und dem oberen Rand der Brillenfassung 1 bzw. des Brillenglas idealerweise annährend zu einer Dreipunktberührung, wodurch eine sichere Fixierung des Visiermessbügels und in der Folge eine exakte Messung des Fassungsscheibenwinkels gewährleistet ist.

Zur Aufnahme des unteren Randes der Brillenfassung 1 weisen die Klemmvorrichtungen 4 und 5 jeweils noch ein unteres Klemmelement 10 auf, das jeweils mit einer Achse 11 drehfest verbunden ist. Jede Achse 11 ist durch das Anlageteil 8 sowie das darüber befindliche freie Ende des Befestigungssteges 6 hindurchgeführt und in diesen Teilen drehbeweglich und axial verschiebbar geführt. Die beiden Bewegungsmöglichkeiten der Achse 11 und damit auch die der unteren Klemmelemente 10 sind in Fig. 2 durch Pfeile angedeutet. Das jeweils obere Ende der Achsen 11 ist mit einem Steuerelement 12 drehfest verbunden. Zwischen dem jeweils zugehörigen oberen und unteren Klemmelement 7, 10 befindlichen Bereich der Achse 11 befindet sich ein Anschlag 13, der mit der Achse 11 drehbeweglich verbunden ist. Steuerelement 12 und Anschlag 13 sind in gleicher Richtung über die Achse 11 hinaus verlängert und hier mit einem parallel zur Achse 11 geführten elastischen Torsionsstab 14 fest verbunden. Der Torsionsstab 14 ist in Höhe des Befestigungssteges 6 in einem Widerlager geführt.

In dem Bereich zwischen dem Steuerelement 12 und der Oberkante des Befestigungssteges 6 ist jede Achse 11 koaxial von einer Druckfeder 15 umgeben, die so dimensioniert ist, dass der Anschlag 13 in Ruhe- oder Ausgangsstellung der Klemmvorrichtungen 4, 5, also ohne dass der Visiermessbügel auf eine Brillenfassung aufgesetzt ist, jeweils an dem Anlageteil 8 des oberen Klemmelements 7 anliegt und sich die unteren Klemmelemente 10 bei Druckaufbringung auf die Steuerelemente 12 leicht nach unten drücken lassen. Auf diese Weise ist eine Anpassung der Klemmvorrichtungen 4, 5 an unterschiedliche Fassungsscheibenhöhen möglich.

Die unteren Klemmelemente 10 sind ähnlich gestaltet wie die oberen Klemmelemente 7. Sie weisen auch jeweils ein Anlageteil 16 auf, von dem sich ein Schenkel 17, hier aber nach oben, V-förmig abspreizt, und liegen ebenfalls über eine Dreipunktanlage an der unteren Kante der Brillenfassung 1 an. Diese wird achsseitig wie oben bereits für die oberen Klemmelemente 7 beschrieben durch zwei parallel zur Achse 11 verlaufende im Querschnitt keilförmig aus der Anlageebene des Anlageteils 16 herausragende Erhebungen und auf der gegenüberliegenden Seite durch den sich V-förmig von der Anlageebene abspreizenden, ebenfalls im Querschnitt keilförmig ausgebildeten Schenkel 17 realisiert.

Auf der in Blickrichtung weisenden Vorderseite der unteren Klemmelemente 10 ist symmetrisch zu ihrer Achse 11 über einen Abstandssteg 18 jeweils eine Markierung 19 angebracht.

Genau an der Stelle, an der die Klemmvorrichtungen 4, 5 über die Befestigungsstege 6 an der Traverse 3 befestigt sind, sind auf deren Frontseite, also auf der in Blickrichtung, zu dem nicht dargestellten Videozentriersystem weisenden Seite Längsmarkierungen 20 angeordnet. Diese liegen jeweils mit dem Befestigungssteg 6 und der Drehachse 11 in einer Ebene und repräsentieren je Glasfassung einen Fixpunkt. Im vorliegenden Beispiel sind sie auf der in Blickrichtung weisenden Stirnseite der Befestigungsstege 6 angeordnet. Das hat den Vorteil, dass bei Veränderung der Position der Klemmvorrichtungen 4, 5 sich die Längsmarkierungen 20 immer gleich an der für die Bestimmung des Fassungsscheibenwinkels β günstigen Position, nämlich oberhalb der Markierungen 19 der unteren Klemmelemente 10 und in der Ebene der Achse 11 befinden. An der Traverse 3 sind zur Aufnahme der Klemmvorrichtungen 4, 5 weitere Öffnungen 21 vorgesehen.

Fig. 3 zeigt den auf die Brillenfassung 1 aufgesetzten Visiermessbügel in der Vorderansicht, also aus der Perspektive des nicht dargestellten Videozentriersystems. Wie schon aus Fig. 1 wird auch hier deutlich, dass die beiden Klemmvorrichtungen 4, 5 des Visiermessbügels so an der Traverse 3 positioniert sind, dass sie links bzw. rechts von der Mitte der Öffnungen für das Brillenglas, also mehr zum Rand der Brillenfassung 1 hin diese klemmen. Bei den meisten Brillenfassungen tritt der Fassungsscheibenwinkel β in diesem Bereich der Brillenfassung 1 am deutlichsten auf. Durch den Schwenkausschlag der unteren Klemmelemente 10 beim Aufsetzen des Visiermessbügels auf die Brillenfassung 1 jeweils nach links bzw. rechts außen entsteht zwischen der Markierung 19 und der Längsmarkierung 20 ein Abstand A.

Fig. 4 zeigt den aufgesetzten Visiermessbügel in der Seitenansicht. Hier ist der Befestigungssteg 6, über den die Klemmvorrichtungen 4, 5 von der Traverse 3 beabstandet sind, deutlich zu erkennen. Ferner ist hier zu erkennen, dass die Klemmvorrichtungen 4, 5 gegenüber der Traverse 3 schräg gestellt sind. Dadurch ist eine Anpassung an die Vorneigung der Brillenfassung 1 möglich, die durch den Vorneigungswinkel α bestimmt ist. Darüber hinaus ist aus dieser Figur der Abstandssteg 18 für die Markierung 19 zu erkennen, mit dem diese von dem unteren Klemmelement 10 beabstandet ist. Im vorliegenden Beispiel ragt die Markierung 19 bis über die Traverse 3 hinaus, wodurch der zwischen den Markierungen 19 und 20 erzeugte Abstand A besonders deutlich wird und somit der Fassungsscheibenwinkel β messtechnisch genauer ermittelt werden kann.

Nachfolgend soll die Funktion der Erfindung näher beschrieben werden:
Der Visiermessbügel wird mit den beiden oberen Klemmelementen 7 auf den oberen Rand der Brillenfassung 1 aufgesetzt. Über die Steuerelemente 12 werden die unteren Klemmelemente 10 gegen die Kraft der Druckfedern 15 nach unten gedrückt, so dass die Öffnungen für die Brillengläser in den durch die oberen und unteren Klemmelemente 7, 10 gebildeten Zwischenraum passen. Mit dem Nachlassen des Drucks auf die Steuerelemente 12 werden die unteren Klemmelemente 10 gleichzeitig in die Position des Verlaufs des unteren Randes der Brillenfassung 1 gedreht, wodurch sie sich bei weiterem Nachlassen des Drucks leicht und exakt an den Verlauf des unteren Randes der Brillenfassung 1 anlegen. Infolge dieser Schwenkbewegung der unteren Klemmelemente 10 nach außen, also aus der o. g. Ebene der Ausgangsstellung der Klemmelemente 7, 10 heraus, verschiebt sich die Markierung 19 beider unteren Klemmelemente 10 gegenüber der jeweils zugehörigen, an der Traverse 3 befindlichen Längsmarkierung 20 horizontal um den Abstand A (Fig. 3), der als wesentliches Kriterium in die Berechnung des Fassungsscheibenwinkels β eingeht. Die Messung dieses Abstandes A erfolgt mit Hilfe des Videozentriersystems. Beim Drehen der Steuerelemente 12, also auch bei jeder Schwenkbewegung der unteren Klemmelemente 10, wird der elastische Torsionsstab 14 über den drehbeweglich mit der Achse 11 verbundenen Anschlag 13, in dem er mit seinem unteren Ende gelagert ist, gegen sein Widerlager am Befestigungssteg 6 gedrückt, wodurch er leicht in sich verdreht wird und aufgrund seiner Elastizität eine Federspannung aufbaut.

Durch Niederdrücken der Steuerelemente 12 werden die unteren Klemmelemente 10 wieder vom unteren Rand der Brillenfassung 1 gelöst und der Visiermessbügel kann von der Brillenfassung 1 abgenommen werden. Dabei schwenken die unteren Klemmelemente 10 aufgrund der oben beschriebenen im Torsionsstab 14 aufgebauten Federspannung selbständig in ihre Ausgangslage zurück.

### Bezugszahlenliste

| | |
|---|---|
| 1 | Brillenfassung |
| 2 | Basiskurve |
| 3 | Traverse |
| 4 | Klemmvorrichtung |
| 5 | Klemmvorrichtung |
| 6 | Befestigungssteg |
| 7 | Oberes Klemmelement |
| 8 | Anlageteil |
| 9 | Schenkel |
| 10 | Unteres Klemmelement |
| 11 | Achse |
| 12 | Steuerelement |
| 13 | Anschlag |
| 14 | Torsionsstab |
| 15 | Druckfeder |
| 16 | Anlageteil |
| 17 | Schenkel |
| 18 | Abstandssteg |
| 19 | Markierung |
| 20 | Längsmarkierungen |
| 21 | Öffnung |

## Patentansprüche

1. Visiermessbügel zur Bestimmung des Fassungsscheibenwinkels (β) einer Brillenfassung (1) mit Hilfe eines Videozentriersystems,
- der eine auf die Brillenfassung (1) aufsetzbare und mittels zweier Klemmvorrichtungen (4, 5) arretierbare Traverse (3) aufweist, deren in Richtung des Videozentriersystems weisende Vorderseite mit zwei symmetrisch zur Mitte der Traverse (3) ausgerichteten Markierungen (20) versehen ist, wobei
- die beiden Klemmvorrichtungen (4, 5) symmetrisch beiderseits der Mitte der Traverse (3) angeordnet sind und aus jeweils paarweise an dem oberen und unteren Rand der Brillenfassung (1) angreifenden Klemmelementen (7, 10) bestehen, wobei die unteren Klemmelemente (10) federnd an der Brillenfassung (1) anliegen und mit jeweils einer ebenfalls in Richtung des Videozentriersystems weisenden Markierung (19) versehen sind, **dadurch gekennzeichnet, dass**
- jedes Klemmelementenpaar (7, 10) in einer zur Rückseite der Traverse (3) beabstandeten vertikalen Achse (11) angeordnet ist,
- die unteren, federnden Klemmelemente (10) mit dieser Achse (11) fest verbunden, entlang dieser verschiebbar und um diese horizontal schwenkbar sind,
- die Markierungen (19) der unteren, federnden Klemmelemente (10) in Richtung des Videozentriersystems zur jeweiligen vertikalen Achse (11) beabstandet sind und
- die Markierungen (20) auf der Vorderseite der Traverse (3) jeweils in einer vertikalen, die jeweilige vertikale Achse enthaltenden Ebene positioniert sind,
- wobei die horizontale Winkelabweichung der Markierung (19) jedes unteren, federnden Klemmelements (10), die sich im Augenblick des Festklemmens der unteren, schwenkbaren Klemmelemente (10) an dem unteren Rand der Brillenfassung (1) gegenüber der jeweils dieser Markierung (19) zugehörigen, in derselben vertikalen Ebene liegenden fixen Markierung (20) auf der Traverse (3) des Visiermessbügels einstellt, ein Maß für den Fassungsscheibenwinkel (β) ist.

2. Visiermessbügel nach Anspruch 1,
**dadurch gekennzeichnet,**
**dass** die schwenkbare Lagerung der unteren Klemmelemente (10) federnd ausgeführt ist.

3. Visiermessbügel nach Anspruch 2,
**dadurch gekennzeichnet,**
**dass** die federnde Schwenkbewegung der unteren Klemmelemente (10) mittels eines elastischen Torsionsstabs (14) erfolgt, der parallel zu der Achse (11) der Klemmelemente (7, 10) angeordnet, an seinem oberen Ende mit dieser drehfest, an seinem unteren Ende mit dieser drehbeweglich verbunden ist und nahe der unteren, drehbeweglichen Verbindung mit der Achse (11) in einem Widerlager geführt ist.

4. Visiermessbügel nach einem der Ansprüche 1 bis 3,
**dadurch gekennzeichnet,**
**dass** die Klemmelementenpaare (7, 10) lösbar mit der Traverse (3) verbunden sind.

5. Visiermessbügel nach einem der Ansprüche 1 bis 4,
**dadurch gekennzeichnet,**
**dass** die vertikale Achse (11) der Klemmelemente (7, 10) in Richtung des Vorneigungswinkels (α) der Brillenfassung (1) schräg gestellt ist.

6. Visiermessbügel nach einem der Ansprüche 1-5,
**dadurch gekennzeichnet,**
**dass** die Klemmelementenpaare (7, 10) in Richtung der Mitte der Traverse (3) schräg gestellt sind.

7. Visiermessbügel nach einem der Ansprüche 1 bis 6,
**dadurch gekennzeichnet,**
**dass** die Klemmelemente (7, 10) mit einer Dreipunktauflage für den Rand der Brillenfassung (1) versehen sind.

8. Verfahren zur Bestimmung des Fassungsscheibenwinkels (β) einer Brillenfassung (1) mit Hilfe eines Videozentriersystems,
**dadurch gekennzeichnet,**
**dass** ein Visiermessbügel gem. einem der Ansprüche 1 bis 7 auf die Brillenfassung (1) aufgesetzt wird, wobei im Augenblick des Festklemmens der unteren, schwenkbaren Klemmelemente (10) an dem unteren Rand der Brillenfassung (1) diese aus der gemeinsamen vertikalen Ebene mit den auf der Traverse (3) des Visiermessbügels angeordneten Markierungen (20) herausschwenken und der dadurch zwischen den Markierungen (20) der Traverse (3) des Visiermessbügels und der jeweils zugehörigen Markierung (19) des unteren Klemmelements (10) entstandene horizontale Abstand (A) mit dem Videozentriersystem gemessen und aus diesem Abstand (A) der Fassungsscheibenwinkel (β) berechnet wird.

## Claims

1. Sighting measurement bracket for determining the bow angle (β) of an eyeglass frame (1) using a video centring system,
- that has a cross member (3), which can be placed on the eyeglass frame (1) and can be locked by two clamping devices (4, 5), the front side of which pointing in the direction of the video centring system has two markings (20) arranged symmetrically about the middle of the cross member (3), whereby
- the two clamping devices (4, 5) are arranged symmetrically on both sides of the middle of the cross member (3) and consist of clamping elements (7,10), pairs of which grip on the upper and lower edge of the eyeglass frame (1), whereby the lower clamping elements (10) are in sprung contact with the eyeglass frame (1) and each has a marking (19) which likewise points in the direction of the video centring system,
**characterised in that**
- each pair of clamping elements (7, 10) is arranged on a vertical axis (11) spaced to the rear side of the cross member (3),
- the lower, sprung clamping elements (10) firmly attached to this axis (11) can be moved along said axis and pivoted horizontally around said axis,
- the markings (19) of the lower, sprung clamping elements (10) are spaced in the direction of the video centring system with respect to the respective vertical axis (11) and
- the markings (20) on the front of the cross member (3) in each case are positioned in a vertical plane which contains the respective vertical axis (11) of the fastening of the clamping element pairs (7, 10),
- whereby the horizontal angular deviation of the marking (19) of each lower sprung clamping element (10), which, at the moment of clamping of the lower, pivotable clamping elements (10) to the lower edge of the eyeglass frame (1), is created compared with the respective fixed marking (20) on the cross member (3) of the sighting measurement bracket and associated with and in the same vertical plane as this marking (19) in each case, is a measure of the bow angle (β).

2. Sighting measurement bracket in accordance with Claim 1,
**characterised in**
**that** the pivotable mounting of the lower clamping elements (10) is designed to be sprung.

3. Sighting measurement bracket in accordance with Claim 2,
**characterised in**
**that** the sprung pivoting movement of the lower clamping elements (10) is achieved by an elastic torsion bar (14) that is arranged parallel to the axis (11) of the clamping elements (7, 10), and connected at its upper end with said clamping elements by a non-rotatable connection and connected at its lower end with the said clamping elements by a rotatable connection and guided near the rotatable connection with the axle (11) in a counter bearing.

4. Sighting measurement bracket in accordance with one of the Claims 1 to 3,
**characterised in**
**that** the clamping element pairs (7, 10) are connected in a separable manner to the cross member (3).

5. Sighting measurement bracket according to one of Claims 1 to 4,
**characterised in**
**that** the vertical axis (11) of the clamping elements (7, 10) is set skewed in the direction of the frame tilt angle (α) of the eyeglass frame (1).

6. Sighting measurement bracket in accordance with one of the Claims 1 to 5,
**characterised in**
**that** the clamping element pairs (7, 10) are set skewed in the direction of the middle of the cross member (3).

7. Sighting measurement bracket according to one of Claims 1 to 6,
**characterised in**
**that** the clamping elements (7, 10) have a three-point support for the edge of the eyeglass frame (1).

8. Procedure for determining the bow angle (β) of an eyeglass frame (1) using a video centring system,
**characterised in**
**that** a sighting measurement bracket in accordance with one of the Claims 1 to 7 is placed on to the eyeglass frame (1), whereby at the moment of clamping of the lower pivotable clamping elements (10) to the lower edge of the eyeglass frame (1) these pivot out from the common vertical plane shared with the markings (20) arranged on the cross member (3) of the sighting measuring bracket and the horizontal distance (A) arising between the markings (20) of the cross member (3) of the sighting measuring bracket and the respective associated marking (19) of the lower clamping element (10) is measured using the video centring system and the bow angle (β) is calculated from this distance (A).

## Revendications

1. Etrier de mesure permettant de déterminer l'angle de cintre (β) d'une monture de lunettes (1) au moyen d'un système de centrage vidéo,
- qui comporte une platine transversale (3) qui peut se poser sur la monture de lunettes (1) et qui peut s'y bloquer au moyen de deux dispositifs de serrage (4, 5), dont la face avant pointant vers le système de centrage vidéo est pourvue de deux repères (20) disposés symétriquement par rapport au milieu de la platine transversale, dans lequel
- les deux dispositifs de serrage (4, 5) sont disposés symétriquement des deux côtés du milieu de la platine transversale (3) et sont constitués respectivement de paires d'éléments de serrage (7, 10) qui saisissent le bord supérieur et inférieur de la monture de lunettes (1), les éléments de serrage inférieurs (10) venant en appui élastique sur la monture de lunettes (1) et étant pourvus respectivement d'un repère (19) orienté également en direction du système de centrage vidéo, **caractérisé en ce que**
- chaque paire d'éléments de serrage (7, 10) est disposée sur un axe vertical (11) distant du revers de la platine de traverse (3),
- les éléments de serrage élastiques inférieurs (10) sont solidarisés avec cet axe (11), aptes à coulisser le long de celui-ci et orientables horizontalement autour de celui-ci,
- les repères (19) des éléments de serrage élastiques inférieurs (10) sont écartés de l'axe vertical respectif (11) en direction du système de centrage vidéo et
- les repères (20) sont positionnés sur la face avant de la platine transversale (3), respectivement, dans un plan vertical de la fixation des paires d'éléments de serrage (7, 10), renfermant l'axe vertical respectif (11),
- moyennant quoi l'écart angulaire horizontal du repère (19) de chaque élément de serrage élastique inférieur (10) qui apparaît au moment du serrage des éléments de serrage inférieurs orientables (10) sur le bord inférieur de la monture de lunettes (1), vis-à-vis du repère fixe (20) sur la platine transversale (3) de l'étrier de mesure dans le même plan vertical, correspondant respectivement à ce repère (19), constitue une grandeur de l'angle de cintre de monture (β).

2. Etrier de mesure selon la revendication 1,
**caractérisé en ce que**
le logement orientable des éléments de serrage inférieurs (10) est réalisé de façon élastique.

3. Étrier de mesure selon la revendication 2,
**caractérisé en ce que**
le mouvement de pivotement élastique des éléments de serrage inférieurs (10) s'effectue au moyen d'une tige de torsion élastique (14), qui est disposée parallèlement à l'axe (11) des éléments de serrage (7, 10), est reliée à son extrémité supérieure à celui-ci de façon solidaire en rotation, est reliée à son extrémité inférieure à celui-ci de façon mobile en rotation et est guidée près de la liaison inférieure mobile en rotation à l'axe (11) dans un épaulement.

4. Étrier de mesure selon l'une quelconque des revendications 1 à 3,
**caractérisé en ce que**
les paires d'éléments de serrage (7, 10) sont reliées de façon amovible à la platine de traverse (3).

5. Étrier de mesure selon l'une quelconque des revendications 1 à 4,
**caractérisé en ce que**
l'axe vertical (11) des éléments de serrage (7, 10) est incliné en direction de l'angle d'inclinaison (α) de la monture de lunettes (1).

6. Étrier de mesure selon l'une quelconque des revendications 1 à 5,
**caractérisé en ce que**
les paires d'éléments de serrage (7, 10) sont inclinées en direction du milieu de la platine transversale (3).

7. Étrier de mesure selon l'une quelconque des revendications 1 à 6,
**caractérisé en ce que**
les éléments de serrage (7, 10) sont pourvus d'une fixation en trois points pour le bord de la monture de lunettes (1).

8. Procédé de détermination de l'angle de cintre (β) d'une monture de lunettes (1) au moyen d'un système de centrage vidéo,
**caractérisé en ce**
**qu'**un étrier de mesure selon l'une quelconque des revendications 1 à 7 est posé sur la monture de lunettes (1), moyennant quoi, au moment du serrage des éléments de serrage inférieurs orientables (10) sur le bord inférieur de la monture de lunettes (1), ceux-ci pivotent à l'extérieur du plan vertical commun avec les repères (20) disposés sur la platine de traverse (3) de l'étrier de mesure et l'écart horizontal (A) produit ainsi entre les repères (20) de la platine transversale (3) de l'étrier de mesure et le repère respectif correspondant (19) de l'élément de serrage inférieur (10) est mesuré à l'aide du système de centrage vidéo et l'angle de cintre de la monture (β) est calculé à partir de cet écart (A).
